# FASCICULE DE BREVET EUROPEEN

(11) **EP 3 827 505 B1**
(45) Date de publication et mention de la délivrance du brevet: **24.08.2022**
(21) Numéro de dépôt: 19731766.2
(22) Date de dépôt: 24.06.2019
(51) Int. Cl.: H02K 3/52, H02K 15/16, H02K 1/24, H02K 1/28

(54) **DISPOSITIF DE GUIDAGE DE FILS POUR ROTOR DE MACHINE ÉLECTRIQUE SYNCHRONE DE TYPE À ROTOR BOBINÉ**
DRAHTFÜHRUNGSVORRICHTUNG FÜR EINEN ROTOR EINER ELEKTRISCHEN SYNCHRONMASCHINE MIT GEWICKELTEM ROTOR
WIRE GUIDING DEVICE FOR A ROTOR OF A SYNCHRONOUS ELECTRIC MACHINE OF THE WOUND ROTOR TYPE

(30) Priorité: 23.07.2018 FR 1856779
(43) Date de publication de la demande: 02.06.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: TAVAKOLI, Shahab, 92420 VAUCRESSON (FR); DELL AGNESE, Anthony, 95100 Argenteuil (FR)
(74) Mandataire: Renault Group
(86) Numéro de dépôt international: PCT/EP2019/066707
(87) Numéro de publication internationale: WO 2020/020551

(56) Documents cités:
- EP-A1- 2 892 134
- FR-A1- 3 062 000
- US-A1- 2001 006 316
- US-A1- 2003 048 023

## Description

La présente invention concerne le domaine des machines électriques synchrones à rotor bobiné. Elle concerne plus particulièrement un dispositif de guidage pour le bobinage de fils électriquement conducteurs autour d'une pluralité de pôles d'un rotor de machine électrique répartis autour d'un arbre s'étendant axialement dans le rotor, le dispositif comprenant une tête de guidage apte à être montée sur l'arbre.

Un rotor de machine électrique synchrone de type à rotor bobiné, comporte un arbre de rotor destiné à être monté rotatif autour de son axe, un paquet de tôles monté coaxialement sur l'arbre de rotor, ledit paquet de tôles comportant une pluralité de pôles saillants radialement, un bobinage de fils électriquement conducteur étant destiné à être enroulé autour de chaque pôle. Une tête de guidage des fils électriquement conducteur autour de chaque pôle du rotor est agencée axialement de part et d'autre du paquet de tôles, chaque tête de guidage étant munie d'un orifice central pour le passage de l'arbre.

Un domaine d'application de l'invention est celui des machines électriques utilisées dans les véhicules automobiles de type électrique ou hybride.

Le document de brevet FR 2 984 034 fait connaître un rotor bobiné, notamment utilisé dans une machine électrique pour un véhicule automobile à traction électrique, intégrant un dispositif de guidage pour fixer les fils des bobinages autour des pôles réalisés par un empilement de tôles.

Le document US 2003/048023 A1 divulgue aussi un rotor bobiné comprenant un dispositif de guidage pour des fils électriquement conducteurs autour d'une pluralité de pôles du rotor.

Les rotors à haute vitesse sont soumis à des conditions de fonctionnement difficiles et notamment à de fortes sollicitations dans le sens radial. En particulier, les bobinages du rotor sont soumis à de fortes forces centrifuges pendant le fonctionnement du rotor et doivent être bien maintenus. Les deux têtes de guidage des fils du bobinage (on parle aussi de « guide tête de bobine ») sont également très sollicitées lors de la rotation du rotor par la force centrifuge et doivent donc être adaptées pour fonctionner dans de telles conditions. Aussi, chaque tête de guidage est classiquement solidaire d'une couronne, qui est une pièce indépendante du corps du rotor, disposée à la périphérie extérieure d'une tête de guidage, de sorte à former un moyen de maintien radial de la tête de guidage. Plus précisément, la couronne présente une configuration annulaire autour de la périphérie extérieure de la tête de guidage, son profil comportant une forme en L comportant une aile orientée axialement et s'appuyant sur la périphérie extérieure de la tête de guidage et une aile orientée radialement vers l'axe et s'appuyant sur une face radiale d'extrémité de chaque pôle de la tête de guidage. De façon à permettre la fixation de la couronne à la tête de guidage, la couronne comporte des orifices au niveau de son aile radiale, destinés à permettre le passage de tirants. Les faces radiales d'extrémité des pôles de la tête de guidage et le paquet de tôles comportent des orifices correspondants, de manière que les tirants puissent traverser axialement la couronne, la tête de guidage et le paquet de tôles jusqu'au côté opposé du rotor, où un écrou de blocage est vissé à l'extrémité libre de chaque tirant débouchant de la couronne opposée. Lorsque l'écrou est serré avec un couple suffisant, typiquement jusqu'à la limite plastique du tirant, l'ensemble est maintenu fermement pour rester assemblé lorsque le rotor est soumis à de fortes forces centrifuges.

Cependant, cet agencement de couronnes pour le maintien radial des têtes de guidage requiert un nombre de pièces important, à savoir les couronnes elles-mêmes, les tirants et écrous, conduisant in fine à un surcroît de poids. En outre, cet agencement requiert un nombre important d'opérations d'assemblage (passage des tirants, opérations de vissage des écrous), qu'il est souhaitable de chercher à réduire.

Eventuellement, en vue d'équilibrer le rotor, un anneau d'équilibrage peut être fixé sur le côté externe de l'aile radiale de la couronne, cet anneau étant pourvu de cavités réparties circonférentiellement autour de celui-ci. L'opération d'équilibrage du rotor consiste à insérer des masses d'équilibrage dans certaines des cavités qui sont réparties circonférentiellement ou bien à enlever de la matière de l'anneau, par perçage de l'anneau. Cependant, ce dispositif d'équilibrage présente un inconvénient en ce que les masses d'équilibrage sont installées sur un anneau d'équilibrage. Cela nécessite par conséquent la présence d'un anneau, au détriment du poids, ainsi qu'une opération de fixation de cet anneau d'équilibrage sur la couronne.

Il est également connu de bloquer l'empilement de tôles du rotor au moyen de bagues d'arrêt métalliques, qui sont classiquement disposées autour de l'arbre de part et d'autre de l'empilement de tôles. Cette disposition permet de protéger le rotor contre les chocs, notamment en cas d'accident, en garantissant le maintien en position initiale de l'empilement de tôles, mais va à l'encontre des besoins d'allégement du rotor, de réduction de sa dimension axiale et de réduction du nombre d'opérations d'assemblage du rotor.

Dans ce contexte, la présente invention vise à remédier à ces inconvénients en proposant un dispositif de guidage, par ailleurs conforme à la définition générique qu'en donne le préambule ci-dessus, qui est essentiellement caractérisé en ce que ladite tête de guidage comprend une structure de base métallique, dotée d'une pluralité de branches s'étendant radialement depuis une partie intérieure de ladite structure de base métallique pourvue d'un orifice central et une structure de plastique surmoulée sur ladite structure de base métallique, en retrait par rapport à une surface cylindrique interne dudit orifice central, ladite surface cylindrique interne n'étant pas surmoulée par ladite structure de plastique de telle sorte que ladite surface cylindrique interne dudit orifice central de ladite structure de base métallique est adaptée à être en contact direct avec l'arbre du rotor pour un montage par frettage sur l'arbre du rotor.

Grâce à cet agencement, on fournit une tête de guidage constituée d'une pièce unique particulièrement rigide dont le montage par frettage de sa partie métallique sur l'arbre du rotor assure un maintien fort de la tête de guidage par rapport à l'arbre, rendant ainsi caduque la fonction jusqu'alors assurée par les couronnes et tirants associés, qui peuvent être supprimés. Les opérations d'assemblage du rotor s'en trouvent ainsi simplifiées.

En outre, la tête de guidage selon l'invention, lorsqu'elle est montée sur l'arbre du rotor de chaque côté de l'empilement de tôles, permet également de reprendre efficacement les efforts axiaux subis par le rotor, notamment en cas de choc. La tête de guidage de l'invention joue donc également le rôle qui est aujourd'hui dévolu aux bagues d'arrêt, à savoir de maintien en position sur l'arbre de l'empilement de tôles, de sorte que les bagues d'arrêt peuvent également être supprimées.

Avantageusement, ladite structure de base métallique comporte au moins une partie pleine d'équilibrage en saillie axialement d'une face externe de ladite partie intérieure, dont au moins une surface s'étendant dans un plan radial s'échappe de ladite structure de plastique surmoulée, de telle sorte à être accessible. En particulier, dans le cas où une opération d'équilibrage du rotor s'avérerait être nécessaire, cette surface radiale est apte à procurer un accès à un outillage d'équilibrage du rotor par enlèvement de matière, typiquement par perçace, de la ou des parties pleines d'équilibrage faisant saillie de la face externe de la partie intérieure de la structure de base métallique.

De préférence, on prévoit une pluralité de parties pleines d'équilibrage situées au voisinage d'un bord extérieur de ladite partie intérieure et s'étendant chacune entre deux branches respectives de ladite structure de base métallique.

Avantageusement, ladite surface radiale s'échappe de ladite structure de plastique surmoulée par une pluralité de cavités ouvertes, réparties circonférentiellement sur ladite structure de plastique surmoulée.

Avantageusement, ladite structure de base métallique est réalisée en une pièce monobloc, en alliage d'aluminium ou d'acier, venue d'emboutissage ou de fonderie.

L'invention concerne également un rotor de machine électrique synchrone de type à rotor bobiné, comportant un arbre de rotor destiné à être monté rotatif autour de son axe, un paquet de tôles monté coaxialement sur l'arbre de rotor, ledit paquet de tôles comportant une pluralité de pôles saillants radialement et au moins une ouverture axiale, un bobinage de fils électriquement conducteur étant destiné à être enroulé autour de chaque pôle, caractérisé en ce qu'il comprend un dispositif de guidage tel que décrit ci-dessus, monté sur l'arbre de part et d'autre dudit paquet de tôles.

Selon un mode de réalisation, une plaque d'équilibrage peut être insérée entre ledit paquet de tôles et chaque tête de guidage, de telle sorte qu'une surface cylindrique externe de ladite plaque d'équilibrage soit accessible. En particulier, dans le cas où une opération d'équilibrage du rotor s'avérerait être nécessaire, cette surface cylindrique externe est apte à procurer un accès à un outillage d'équilibrage du rotor par enlèvement de matière, typiquement par perçace, de la plaque d'équilibrage.

L'invention concerne encore un procédé de montage d'un rotor tel que décrit ci-dessus, ledit procédé comprenant :
une étape d'assemblage par frettage de chacune desdites têtes de guidage sur l'arbre de rotor de part et d'autre dudit paquet de tôle, en même temps que l'assemblage par frettage dudit paquet de tôles sur ledit arbre de rotor,
   et
une étape de bobinage de fils électriquement conducteurs autour de chaque pôle par l'intermédiaire desdites têtes de guidage.

Avantageusement, lorsque la structure de base métallique de la tête de guidage est pourvue d'au moins une partie pleine d'équilibrage telle que décrite ci-dessus, le procédé peut comprendre une étape d'équilibrage du rotor par enlèvement de matière de ladite au moins une partie pleine d'équilibrage de ladite structure de base métallique.

Avantageusement, suivant le mode de réalisation du rotor avec plaque d'équilibrage telle que décrite ci-dessus, le procédé peut comprendre une étape d'équilibrage du rotor par enlèvement de matière de ladite plaque d'équilibrage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente schématiquement une vue en perspective de la structure de base métallique d'une tête de guidage selon un mode de réalisation de l'invention ;
- la Figure 2 représente schématiquement une vue en perspective en coupe partielle de la tête de guidage surmoulée, suivant le mode de réalisation de la figure 1,
- la Figure 3 représente schématiquement une vue coupe transversale de la tête de guidage surmoulée illustrée à la figure 2,
- la Figure 4 représente schématiquement une vue en perspective d'une tête de guidage surmoulée selon un mode de réalisation particulier de l'invention, montée sur l'arbre du rotor,
- la figure 5 représente schématiquement une vue en perspective en coupe partielle de la tête de guidage surmoulée selon un autre mode de réalisation particulier de l'invention,
- la Figure 6 représente schématiquement un rotor selon l'invention en vue éclatée, avec la tête de guidage de la figure 5 montée sur le rotor et une plaque d'équilibrage selon un mode de réalisation particulier.

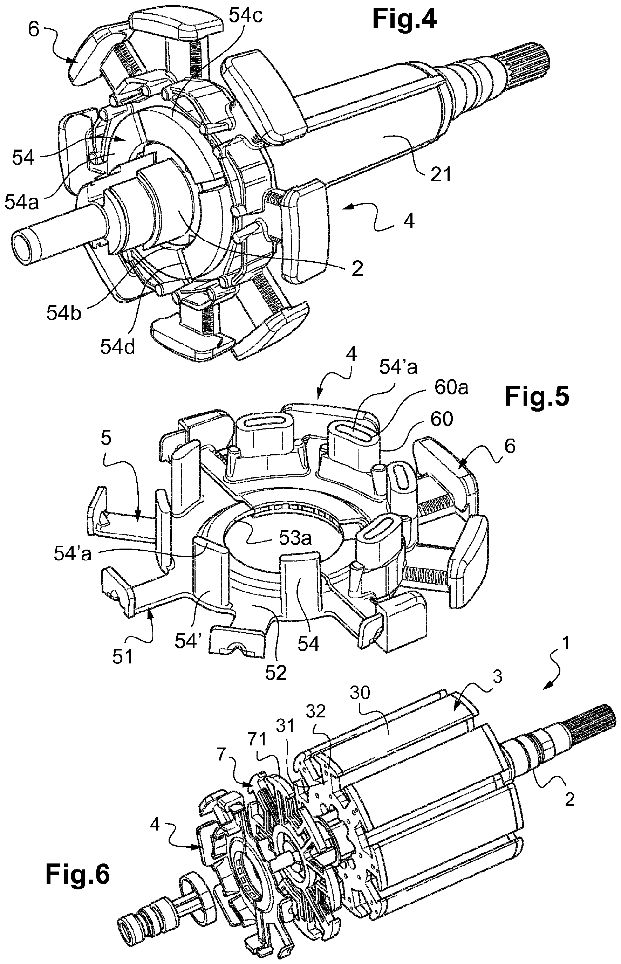

La Figure 6 illustre schématiquement un rotor 1 de machine électrique. Le rotor 1 comprend un arbre 2, qui s'étend axialement à travers le rotor 1.

Un paquet de tôles 3 est monté coaxialement sur l'arbre de rotor. Ce paquet de tôles 3 est formé d'un empilement axial de tôles, qui s'étendent dans un plan radial perpendiculaire à l'axe de l'arbre de rotor. Dans ce plan radial, les tôles du paquet de tôles ont toutes un contour identique. Ce paquet de tôles comporte des pôles saillants 30, qui sont répartis régulièrement selon une direction circonférentielle et saillants de l'arbre vers la périphérie extérieure du rotor. Dans l'exemple de réalisation décrit en référence aux figures, le paquet de tôles comporte huit pôles saillants 30. Toutefois, l'invention n'est pas limitée à ce type de configuration et s'applique pour un paquet de tôles comportant une pluralité de pôles saillants et, préférentiellement, au moins trois pôles.

Le paquet de tôles 3 est monté par frettage sur la surface externe cylindrique de l'arbre 2 du rotor. Ainsi, on monte à chaud le paquet de tôles 3 par emmanchement sur la surface externe cylindrique de l'arbre du rotor.

Chaque pôle 30 est constitué d'un bras 31 qui s'étend radialement vers la périphérie extérieure du rotor. L'extrémité libre 32 du pôle 20 se termine par un retour saillant circonférentiellement de part et d'autre du bras 31. La fonction du retour saillant 32 de chaque pôle 30 est de retenir dans la direction radiale un bobinage d'excitation électriquement conducteur, qui est enroulé autour du bras radial 31 de chaque pôle 30, à l'encontre de la force centrifuge subie par le bobinage d'excitation lors de la rotation du rotor.

Chaque pôle 30 comporte ainsi un bobinage d'excitation. Des têtes de guidage 4, dont une seule est représentée sur la figure 6, sont montées coaxialement à l'arbre 2 du rotor de part et d'autre du paquet de tôles 3, pour guider des fils conducteurs constituant le bobinage d'excitation autour de chaque pôle 30. Chaque tête de guidage 4 disposée de part et d'autre du paquet de tôles 3, a globalement la forme d'un disque s'étendant dans un plan radial perpendiculaire à l'axe de l'arbre du rotor.

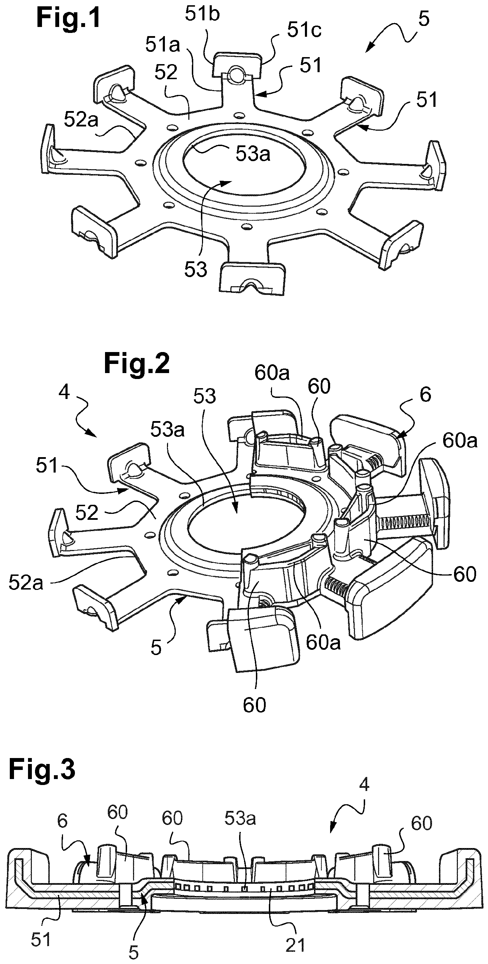

Les figures 1 à 3 illustrent plus précisément la construction d'une telle tête de guidage, qui a la particularité, selon l'invention, d'être constituée d'une structure de base métallique 5, telle qu'illustrée à la figure 1, qui est surmoulée par une structure de plastique 6, comme illustrée aux figures 2 et 3.

Autrement dit, selon l'invention, la structure de base métallique 5 constitue un insert métallique de la tête de guidage 4, préférentiellement en alliage d'aluminium ou d'acier, laquelle tête de guidage 4 étant obtenue par un surmoulage enrobant au moins partiellement cet insert métallique 5, à l'aide d'un matériau plastique à haute tenue mécanique, tel qu'un matériau plastique thermodurcissable, constituant la structure de plastique 6 de la tête de guidage 4.

Comme illustré à la figure 1, l'insert métallique 5 est dotée d'une pluralité de branches 51, huit selon l'exemple, s'étendant radialement depuis une partie intérieure 52 de l'insert, pourvue d'un orifice central 53 pour le montage coaxial sur l'arbre du rotor sur lequel la tête de guidage est destinée à être montée.

Chaque branche 51 de l'insert métallique 5 comporte une portion principale 51a, qui s'étend radialement du bord extérieur 52a de la partie intérieure 52 et qui est délimitée, à son extrémité opposée au bord extérieur 52a, par deux épaulements 51b, 51c.

L'insert métallique 5 tel qu'illustré sur les figures 1 à 3 est préférentiellement obtenu par emboutissage d'une tôle métallique.

Chaque branche radiale 51 de l'insert métallique 5 constitue ainsi, une fois surmoulée par la structure de plastique 6, une branche radiale de la tête de guidage 4, destinée à être positionnée en regard d'un pôle respectif du 30 du rotor 1, de sorte à permettre le bobinage. Plus précisément, la portion principale 51a, une fois revêtue par la structure de plastique 6 surmoulée, est destinée à recevoir un ensemble de fils conducteurs, ladite portion principale 51a surmoulée plastique étant disposée en regard d'un bras radial 31 de chaque pôle 30 du paquet de tôles 2 du rotor 1 tandis que les deux épaulements 51b, 51c, également revêtus par la structure de plastique 6 surmoulée, sont destinés à être disposés en regard du retour 32 saillant circonférentiellement de part et d'autre du bras 31 de chaque pôle 30. Le fil conducteur du bobinage d'excitation de chaque pôle est donc bobiné autour de la portion principale de la branche correspondante de la tête de guidage entre les deux épaulements selon une direction parallèle aux épaulements.

Conformément à l'invention, on prévoit que la structure de plastique 6 surmoulée sur l'insert métallique 5 soit en retrait par rapport à une surface cylindrique interne 53a de l'orifice central 53 de l'insert métallique 5. Autrement dit, cette surface cylindrique interne 53a métallique n'est pas surmoulée par la couche plastique 6, de telle sorte qu'elle peut venir en contact direct avec la surface cylindrique externe 21 de l'arbre du rotor pour un montage par frettage de la tête de guidage sur l'arbre du rotor. Autrement dit, les deux surfaces concentriques, respectivement la surface cylindrique externe 21 de l'arbre du rotor et la surface cylindrique interne 53a de la tête de guidage 4 sont jointes par frettage.

La tête de guidage 4 est avantageusement fixée par frettage sur l'arbre de rotor en même temps que le paquet de tôles 3 est fretté sur l'arbre de rotor. L'opération de bobinage des fils autour des pôles du rotor peut ensuite être effectuée.

Ainsi, la tête de guidage 4 assure également le rôle de bague d'arrêt de part et d'autre de l'empilement de tôles, du simple fait de son frettage sur l'arbre. En effet, la quantité de bobinage sur la tête de guidage est négligeable par rapport à la quantité de bobinage sur les pôles du rotor. L'empilement de tôles a plus de risques de se défretter par l'inertie de la masse de bobinage que la tête de guidage, le frettage de cette dernière sur l'arbre sera donc suffisant pour bloquer l'empilement de tôles par rapport à une rotation inertielle.

La conception de la tête de guidage de l'invention telle que décrite ci-dessus, constituée d'une structure de base métallique ou insert métallique, qui est surmoulée par une structure de plastique, permet d'assurer une plus grande rigidification de la tête de guidage, offrant une résistance accrue aux risques de rupture et de fissuration, notamment à l'égard des fortes forces centrifuges susceptibles de s'exercer pendant le fonctionnement du rotor.

Cette conception permet également de supprimer des pièces telles que les couronnes et tirants associés, ainsi que les bagues d'arrêt, ce qui conduit à un allégement du rotor et à une réduction du nombre d'opérations d'assemblage du rotor.

En référence aux figures 2 et 3, la structure de plastique 6 surmoulée sur l'insert métallique 5 peut être pourvue, sur une face externe de celle-ci, soit sur la face opposée à l'empilement de tôles du rotor par rapport à la tête de guidage lorsque celle-ci est montée sur le rotor, de cavités 60 réparties circonférentiellement, ouvertes axialement vers l'extérieur de la tête de guidage par l'intermédiaire d'une ouverture 60a s'étendant dans un plan radial. Préférentiellement, chaque cavité 60 s'étend circonférentiellement entre deux branches radiales de la tête de guidage 4. Ces cavités 60 de la structure de plastique surmoulée 6 de la tête de guidage 4 sont plus particulièrement adaptées à recevoir des masses d'équilibrage, pour pallier un éventuel défaut d'équilibrage du rotor.

Les figures 4 et 5 se rapportent à des modes de réalisation particuliers de la tête de guidage de l'invention, qui est adaptée pour permettre de modifier éventuellement la répartition des masses sur le rotor si un équilibrage du rotor s'avérait nécessaire, sans qu'il soit besoin d'y rapporter des masses d'équilibrage additionnelles.

Pour ce faire, en référence à la figure 4, l'insert métallique de la tête de guidage est adapté en ce qu'il comporte une partie pleine d'équilibrage 54, qui fait saillie axialement d'une face externe de la partie intérieure de l'insert métallique et qui présente une surface 54a s'étendant dans un plan radial, qui s'échappe de la structure de plastique surmoulée 6, de telle sorte que cette surface radiale 54a de la partie pleine d'équilibrage 54 puisse être accessible. Ainsi, cette surface radiale 54a permet de procurer un accès dans le sens axial à un outillage d'équilibrage du rotor, par enlèvement de matière, par exemple par perçage, de cette partie pleine d'équilibrage 54 en saillie de la face externe de l'insert métallique de la tête de guidage, ce qui permet alors de modifier la répartition des masses sur le rotor.

A noter que par face externe de l'insert métallique, on entend la face orientée axialement vers l'extérieur du rotor, soit à l'opposé de l'empilement de tôle par rapport à la tête de guidage lorsque cette dernière est montée sur le rotor.

Suivant le mode de réalisation particulier de la figure 4, la partie pleine d'équilibrage 54 de l'insert métallique forme une couronne continue en saillie de la face externe, dont les surfaces cylindrique interne 54b et externe 54c s'étendent respectivement au voisinage de l'orifice central de l'insert métallique et au voisinage du bord extérieur de la partie intérieure de l'insert métallique.

La surface radiale 54a de la partie pleine d'équilibrage 54 est en outre pourvue de rainures radiales 54d s'étendant entre les surfaces cylindrique interne 54b et externe 54c de la partie pleine d'équilibrage 54, destinées à procurer un passage pour les fils des bobinage et à les protéger pendant l'opération d'équilibrage.

La figure 5 illustre une variante de réalisation des moyens d'équilibrage prévus sur l'insert métallique 5 de la tête de guidage 4. Selon cette variante de réalisation, les moyens d'équilibrage de l'insert métallique 5 sont constitués d'une pluralité de parties pleines d'équilibrage 54' faisant saillie axialement de la face externe au voisinage du bord extérieur 52a de la partie intérieure 52 de l'insert métallique 5 et s'étendant chacune entre deux branches respectives 51 de l'insert métallique 5. Les cavités 60 de la structure de plastique 6 sont alors surmoulées autour de cette pluralité de parties pleines d'équilibrage 54' en saillie, de telle sorte qu'une surface radiale 54'a respective de chacune de ces parties pleines d'équilibrage 54' s'échappe de la structure de plastique surmoulée 6 par l'ouverture 60a vers l'extérieur de ces cavités 60. Les surfaces radiales 54'a sont disposées affleurantes dans le plan de l'ouverture 60a des cavités 60.

Les modes de réalisation de la tête de guidage illustrés aux figures 4 et 5, décrivant des moyens d'équilibrages du rotor intégrés à l'insert métallique de la tête de guidage, nécessitent d'adapter le mode de fabrication de l'insert métallique 5, qui est préférentiellement obtenu par moulage de fonderie, dans ce contexte.

La figure 6 décrit encore un autre mode de réalisation pour réaliser une éventuelle opération d'équilibrage du rotor. Suivant ce mode de réalisation, une plaque d'équilibrage métallique 7, par exemple venue de fonderie, dont la forme épouse les contours des pôle du rotor, est montée sur l'arbre entre le paquet de tôles 3 et chaque tête de guidage 4 disposée axialement de part et d'autre du paquet de tôles 3. Cette plaque d'équilibrage 7 présente une surface cylindrique périphérique externe 71, susceptible de procurer un accès dans le sens radial à un outillage d'équilibrage du rotor, par enlèvement de matière, par exemple par perçage, de cette plaque d'équilibrage, si une modification de la répartition des masses sur le rotor s'avérait être nécessaire.

## Revendications

1. Dispositif de guidage pour le bobinage de fils électriquement conducteurs autour d'une pluralité de pôles (30) d'un rotor (1) de machine électrique répartis autour d'un arbre (2) s'étendant axialement dans le rotor, ledit dispositif comprenant une tête de guidage (4) apte à être montée sur l'arbre (2), **caractérisé en ce que** ladite tête de guidage (4) comprend une structure de base métallique (5) dotée d'une pluralité de branches (51) s'étendant radialement depuis une partie intérieure (52) de ladite structure de base métallique pourvue d'un orifice central (53), et une structure de plastique (6) surmoulée sur ladite structure de base métallique (5), en retrait par rapport à une surface cylindrique interne (53a) dudit orifice central (53), ladite surface cylindrique interne n'étant pas surmoulée par ladite structure de plastique de telle sorte que ladite surface cylindrique interne (53a) dudit orifice central (53) de ladite structure de base métallique (5) est adaptée à être en contact direct avec l'arbre du rotor pour un montage par frettage sur l'arbre du rotor.

2. Dispositif selon la revendication 1, **caractérisé en ce que** ladite structure de base métallique (5) comporte au moins une partie pleine d'équilibrage (54, 54') en saillie axialement d'une face externe de ladite partie intérieure (52), dont au moins une surface (54a, 54'a) s'étendant dans un plan radial s'échappe de ladite structure de plastique (6) surmoulée, de telle sorte à être accessible.

3. Dispositif selon la revendication 2, **caractérisé en ce que** ladite structure de base métallique (5) comprend une pluralité de parties pleines d'équilibrage (54') situées au voisinage d'un bord extérieur (52a) de ladite partie intérieure (52) et s'étendant chacune entre deux branches (51) respectives de ladite structure de base métallique (5).

4. Dispositif selon la revendication 3, **caractérisé en ce que** ladite surface radiale (54'a) s'échappe de ladite structure de plastique (6) surmoulée par une pluralité de cavités ouvertes (60), réparties circonférentiellement sur ladite structure de plastique (6) surmoulée.

5. Dispositif selon l'une quelconque des revendications précédentes, **caractérisé en ce que** ladite structure de base métallique (5) est réalisée en une pièce monobloc, en alliage d'aluminium ou d'acier, venue d'emboutissage ou de fonderie.

6. Rotor (1) de machine électrique synchrone de type à rotor bobiné, comportant un arbre (2) de rotor destiné à être monté rotatif autour de son axe, un paquet de tôles (3) monté coaxialement sur l'arbre (2) de rotor, ledit paquet de tôles (3) comportant une pluralité de pôles (30) saillants radialement et au moins une ouverture axiale, un bobinage de fils électriquement conducteurs étant destiné à être enroulé autour de chaque pôle, **caractérisé en ce qu'**il comprend deux dispositifs de guidage selon l'une quelconque des revendications précédentes, montés sur l'arbre (2) de part et d'autre dudit paquet de tôles (3).

7. Rotor selon la revendication 6, **caractérisé en ce qu'**il comprend une plaque d'équilibrage (7) insérée entre ledit paquet de tôles (3) et chaque tête de guidage (4), de telle sorte qu'une surface cylindrique périphérique externe (71) de ladite plaque d'équilibrage (7) soit accessible.

8. Procédé de montage d'un rotor selon l'une quelconque des revendications 6 ou 7, ledit procédé comprenant :
une étape d'assemblage par frettage de chacune desdites têtes de guidage (4) sur l'arbre (2) de rotor de part et d'autre dudit paquet de tôle, en même temps que l'assemblage par frettage dudit paquet de tôles (3) sur ledit arbre (2) de rotor,
et
une étape de bobinage de fils électriquement conducteurs autour de chaque pôle (30) par l'intermédiaire desdites têtes de guidage (4).

9. Procédé selon la revendication 8 en combinaison avec l'une quelconque des revendications 2 à 4, **caractérisé en ce qu'**il comprend une étape d'équilibrage du rotor par enlèvement de matière de ladite au moins une partie pleine d'équilibrage (54, 54') de ladite structure de base métallique (5).

10. Procédé selon la revendication 8 en combinaison avec la revendication 7, **caractérisé en ce qu'**il comprend une étape d'équilibrage du rotor par enlèvement de matière de ladite plaque d'équilibrage (7).

## Patentansprüche

1. Führungsvorrichtung zum Wickeln von elektrisch leitenden Drähten um mehrere Pole (30) eines Rotors (1) einer elektrische Maschine, die um eine Welle (2) verteilt sind, die sich axial im Rotor erstreckt, wobei die Vorrichtung einen Führungskopf (4) umfasst, der dazu geeignet ist, an der Welle (2) montiert zu werden, **dadurch gekennzeichnet, dass** der Führungskopf (4) eine metallische Grundstruktur (5) umfasst, die mit mehreren Schenkeln (51) versehen ist, die sich radial von einem inneren Teil (52) der metallischen Grundstruktur erstrecken, der mit einer zentralen Öffnung (53) versehen ist, und eine Kunststoffstruktur (6), die auf die metallische Grundstruktur (5) aufgeformt und relativ zu einer inneren zylindrischen Fläche (53a) der zentralen Öffnung (53) zurückgesetzt ist, wobei die innere zylindrische Fläche nicht von der Kunststoffstruktur umformt ist, so dass die innere zylindrische Fläche (53a) der zentralen Öffnung (53) der metallischen Grundstruktur (5) dazu geeignet ist, für eine Schrumpfmontage an der Rotorwelle in direktem Kontakt mit der Rotorwelle zu stehen.

2. Vorrichtung nach Anspruch 1, **dadurch gekennzeichnet, dass** die metallische Grundstruktur (5) mindestens einen massiven Auswuchtteil (54, 54') aufweist, der axial von einer Außenseite des inneren Teils (52) vorsteht, wovon mindestens eine Fläche (54a, 54'a), die sich in einer radialen Ebene erstreckt, aus der aufgeformten Kunststoffstruktur (6) herausragt, so dass sie zugänglich ist.

3. Vorrichtung nach Anspruch 2, **dadurch gekennzeichnet, dass** die metallische Grundstruktur (5) mehrere massive Auswuchtteile (54') umfasst, die sich in der Nähe einer Außenkante (52a) des inneren Teils (52) befinden und sich jeweils zwischen zwei jeweiligen Schenkeln (51) der metallischen Grundstruktur (5) erstrecken.

4. Vorrichtung nach Anspruch 3, **dadurch gekennzeichnet, dass** die radiale Fläche (54'a) durch mehrere offene Hohlräume (60), die in Umfangsrichtung über die aufgeformte Kunststoffstruktur (6) verteilt sind, aus der aufgeformten Kunststoffstruktur (6) herausragt.

5. Vorrichtung nach einem der vorangehenden Ansprüche, **dadurch gekennzeichnet, dass** die metallische Grundstruktur (5) aus einem einteiligen Stück aus einer Aluminium- oder Stahllegierung hergestellt ist, das durch Tiefziehen oder Gießen gefertigt ist.

6. Rotor (1) einer elektrischen Synchronmaschine vom Typ mit gewickeltem Rotor, mit einer Rotorwelle (2), die dazu bestimmt ist, um ihre Achse drehbar montiert zu werden, einem Blechpaket (3), das koaxial an der Rotorwelle (2) montiert ist, wobei das Blechpaket (3) mehrere radial vorstehende Pole (30) und mindestens eine axiale Öffnung aufweist und wobei eine Wicklung elektrisch leitender Drähte dazu bestimmt ist, um jeden Pol gewickelt zu sein, **dadurch gekennzeichnet, dass** er zwei Führungsvorrichtungen nach einem der vorangehenden Ansprüche umfasst, die auf beiden Seiten des Blechpakets (3) an der Welle (2) montiert sind.

7. Rotor nach Anspruch 6, **dadurch gekennzeichnet, dass** er eine Auswuchtplatte (7) umfasst, die zwischen dem Blechpaket (3) und jedem Führungskopf (4) eingefügt ist, so dass eine äußere zylindrische Umfangsfläche (71) der Auswuchtplatte (7) zugänglich ist.

8. Verfahren zur Montage eines Rotors nach einem der Ansprüche 6 oder 7, wobei das Verfahren Folgendes umfasst:
einen Schritt der Schrumpfmontage jedes der Führungsköpfe (4) an einer Rotorwelle (2) auf beiden Seiten des Blechpakets und der gleichzeitigen Schrumpfmontage des Blechpakets (3) an der Rotorwelle (2)
und
einen Schritt des Wickelns von elektrisch leitenden Drähten um jeden Pol (30) mit Hilfe der Führungsköpfe (4).

9. Verfahren nach Anspruch 8 in Kombination mit einem der Ansprüche 2 bis 4, **dadurch gekennzeichnet, dass** es einen Schritt des Auswuchtens des Rotors durch Abtragen von Material von dem mindestens einen massiven Auswuchtteil (54, 54') der metallischen Grundstruktur (5) umfasst.

10. Verfahren nach Anspruch 8 in Kombination mit Anspruch 7, **dadurch gekennzeichnet, dass** es einen Schritt des Auswuchtens des Rotors durch Abtragen von Material von der Auswuchtplatte (7) umfasst.

## Claims

1. Guide device for the winding of electrically conductive wires around a plurality of poles (30) of an electric machine rotor (1) that are distributed around a shaft (2) that extends axially through the rotor, said device comprising a guide head (4) that is able to be mounted on the shaft (2), **characterized in that** said guide head (4) comprises a metal basic structure (5) provided with a plurality of legs (51) extending radially from an interior part (52) of said metal basic structure that is provided with a central orifice (53), and a plastics structure (6) overmolded on said metal basic structure (5), in a manner set back from an internal cylindrical surface (53a) of said central orifice (53), said internal cylindrical surface not being overmolded with said plastics structure such that said internal cylindrical surface (53a) of said central orifice (53) of said metal basic structure (5) is designed to be in direct contact with the shaft of the rotor in order to be mounted on the shaft of the rotor by way of an interference fit.

2. Device according to Claim 1, **characterized in that** said metal basic structure (5) has at least one solid balancing part (54, 54') protruding axially from an external face of said interior part (52), at least one surface (54a, 54'a) thereof that extends in a radial plane being free of said overmolded plastics structure (6) so as to be accessible.

3. Device according to Claim 2, **characterized in that** said metal basic structure (5) comprises a plurality of solid balancing parts (54') that are situated in the vicinity of an exterior edge (52a) of said interior part (52) and each extend between two respective legs (51) of said metal basic structure (5).

4. Device according to Claim 3, **characterized in that** said radial surface (54'a) is free of said overmolded plastics structure (6) by way of a plurality of open cavities (60) that are distributed circumferentially over said overmolded plastics structure (6).

5. Device according to any one of the preceding claims, **characterized in that** said metal basic structure (5) is produced in one piece, from an aluminum or steel alloy, by stamping or casting.

6. Rotor (1) of a synchronous electric machine of the wound rotor type, having a rotor shaft (2) intended to be mounted so as to rotate about its axis, a set of laminations (3) mounted coaxially on the rotor shaft (2), said set of laminations (3) having a plurality of radially protruding poles (30) and at least one axial opening, a winding of electrically conductive wires being intended to be wound around each pole, **characterized in that** it comprises two guide devices according to any one of the preceding claims that are mounted on the shaft (2) on either side of said set of laminations (3).

7. Rotor according to Claim 6, **characterized in that** it comprises a balancing plate (7) inserted between said set of laminations (3) and each guide head (4), such that an external peripheral cylindrical surface (71) of said balancing plate (7) is accessible.

8. Method for assembling a rotor according to either one of Claims 6 and 7, said method comprising:
a step of fitting each of said guide heads (4) on the rotor shaft (2) on either side of said set of laminations by way of an interference fit, at the same time as said set of laminations (3) is fitted on said rotor shaft (2) by way of an interference fit,
and
a step of winding electrically conductive wires around each pole (30) by way of said guide heads (4).

9. Method according to Claim 8 in combination with any one of Claims 2 to 4, **characterized in that** it comprises a step of balancing the rotor by removal of material from said at least one solid balancing part (54, 54') of said metal basic structure (5).

10. Method according to Claim 8 in combination with Claim 7, **characterized in that** it comprises a step of balancing the rotor by removal of material from said balancing plate (7).
